# EUROPÄISCHE PATENTSCHRIFT

(11) **EP 2 060 457 B1**
(45) Veröffentlichungstag und Bekanntmachung des Hinweises auf die Patenterteilung: **08.06.2016**
(21) Anmeldenummer: 08014326.6
(22) Anmeldetag: 12.08.2008
(51) Int. Cl.: B60T 8/17, B60T 13/66

(54) **Bremssteuermodul**
Brake control module
Module de commande de freinage

(30) Priorität: 14.11.2007 DE 102007054189
(43) Veröffentlichungstag der Anmeldung: 20.05.2009
(73) Patentinhaber: WABCO GmbH, 30432 Hannover (DE)
(72) Erfinder: Heise, Bernd, 30823 Garbsen (DE); Risse, Rainer, 30982 Pattensen-Reden (DE); Stender, Axel, 31787 Hameln (DE); Witte, Norbert, 31867 Lauenau (DE)
(74) Vertreter: Günther, Constantin

(56) Entgegenhaltungen:
- EP-A- 1 541 437
- EP-A- 1 717 121
- DE-A1- 10 310 235
- GB-A- 2 284 458
- US-A1- 2005 040 701
- WABCO: "Trailer EBS D - Systembeschreibung" 2006, WABCO VEHICLE CONTROL SYSTEMS , WABCO , XP002516105 * Seite 5 - Seite 7 *
- ANONYMOUS: 'International Standard ISO 7638-1 Road vehicles - Electrical connectors for braking systems - Part 1' 15 September 1997, XP009161978

## Beschreibung

Die Erfindung betrifft ein Bremssteuermodul für einen Erstanhänger eines Lastkraftwagens. Derartige Lastkraftwagen umfassen ein motorisiertes Zugfahrzeug und einen oder mehrere Anhänger. Besitzt der Lastkraftwagen zwei oder mehr Anhänger, wird beispielsweise von einem Eurokombi oder einem Roadtrain gesprochen.

Bekannte Lastkraftwagen mit zwei oder mehr Anhängern weisen das Problem auf, dass durch die langen pneumatischen Leitungen die Bremsanlage des Zweitanhängers erheblich später als die Bremsanlage des Erstanhängers anspricht.

DE 103 10 235 A1 offenbart ein Anhängersteuerventil, das für den Normalbetrieb elektrisch und für den Redundanzbetrieb bei ausgefallener Elektronik pneumatisch betrieben wird. Neben diesem Anhängersteuerventil, welches die Druckluft für die beiden Kupplungsköpfe zum Anhänger bereitstellt, ist im Motorwagen-Zugfahrzeug ein 7-poliger elektrischer Stecker zum Anhänger, genormt nach der ISO 1992-Schnittstelle, eingebaut. Es wird vorgeschlagen, das für EBS-Anwendungen geeignete Anhängersteuerventil elektrisch direkt über die als CAN-Datenbus ausgebildete ISO 1992-Schnittstelle zu betreiben.

GB 2 284 458 A offenbart ein Bremssystem für ein Fahrzeug mit mehreren Anhängern.

Der Erfindung liegt die Aufgabe zugrunde, Nachteile im Stand der Technik zu überwinden.

Die Erfindung löst das Problem durch ein Bremssteuermodul für einen Erstanhänger eines Lastkraftwagens, wobei das Bremssteuermodul eine Zugfahrzeug-Schnittstelle, die (i) eine Zugfahrzeug-CAN-Schnittstelle zum Verbinden mit einem Zugfahrzeug-CAN-Anschluss eines Zugfahrzeugs, (ii) eine Zugfahrzeugs-Spannungsversorgungs-Schnittstelle zum Verbinden mit einem Zugfahrzeug-Spannungsversorgungs-Anschluss eines Zugfahrzeugs und (iii) eine Zugfahrzeug-Warnlampen-Schnittstelle zum Verbinden mit einem Zugfahrzeug-Warnlampen-Anschluss des Zugfahrzeugs umfasst, und einer Zweitanhänger-Schnittstelle zum Anschließen eines Zweitanhängers, der an dem Erstanhänger angekoppelt ist, die (i) eine Zweitanhänger-CAN-Schnittstelle zum Verbinden mit einem Zweitanhänger-CAN-Anschluss des Zweitanhängers, eine Zweitanhänger-Spannungsversorgungs-Schnittstelle zum Verbinden mit einem Spannungs-Anschluss des Zweitanhängers und (iii) eine Zweitanhänger-Warnlampen-Schnittstelle zum Verbinden mit einem Zweitanhänger-Warnlampen-Anschluss des Zweitanhängers umfasst. Gemäß weiterer Aspekte bezieht sich die Erfindung auf einen Anhänger mit einem derartigen Bremsmodul und einen Lastkraftwagen, der in zumindest einem Anhänger ein derartiges Bremsmodul besitzt.

Die Spannungsversorgungs-Schnittstellen sind optional und nicht zwingend erforderlich. Auch die Warnlampen-Schnittstelle ist gegebenenfalls entbehrlich.

Vorteilhaft an der Erfindung ist das bessere Bremsverhalten. Dadurch, dass das Bremssteuermodul eine CAN-Schnittstelle für den Zweitanhänger besitzt, kann auch der Zweitanhänger über einen elektrischen Sollwert gebremst werden. Bei bisherigen Systemen wird der Zweitanhänger rein pneumatisch gebremst. Durch das elektrische Bremsen spricht die Bremse im Zweitanhänger schneller an und die Bremsverzögerung wird zu Beginn des Bremsvorgangs erhöht.

Ein weiterer Vorteil ist die Flexibilität des Bremssteuermoduls. Das Bremssteuermodul ist nämlich bevorzugt so ausgebildet, dass es Ansteuerbefehle des Zugfahrzeugs an alle nachfolgenden Anhänger, die im Folgenden allgemein als Zweitanhänger bezeichnet werden, weiterleitet. Es sind damit im Prinzip beliebig viele Anhänger hintereinander hängbar, die alle durch elektrische Signale des CAN-Busses gebremst werden können.

Ein weiterer Vorteil ist, dass Anhänger beliebig kombiniert werden können. Erfindungsgemäße Anhänger mit dem erfindungsgemäßen Bremssteuermodul sind sowohl als Erstanhänger als auch an als Zweitanhänger verwendbar.

Es ist ein weiterer Vorteil der Erfindung, dass Informationen zum Zustand eines Zweitanhängers auch im Zugfahrzeug verfügbar werden. So können beispielsweise Informationen über den Verschleißzustand des Bremsbelags, der Reifen und/oder der Last des Zweitanhängers mittels des CAN-Busses über den Erstanhänger an das Zugfahrzeug gesendet werden. Vorteilhaft ist zudem die einfache Verknüpfung aller Schnittstellen von Anhängern und Zugfahrzeug.

Im Rahmen der vorliegenden Beschreibung wird unter einem Zugfahrzeug insbesondere jedes Fahrzeug verstanden, an das der Erstanhänger angekoppelt ist. Das Zugfahrzeug kann, muss aber kein motorisiertes Zugfahrzeug sein. Es ist möglich, dass auch das Zugfahrzeug seinerseits ein Anhänger ist. Die Terminologie als Erstanhänger bezeichnet lediglich eine mögliche und besonders günstige Anwendung für das Bremssteuermodul. Gegenstand der Erfindung ist insbesondere auch das Bremsmodul als solches. Der Erstanhänger oder der Zweitanhänger können beispielsweise ein Dolly bzw. Rollwagen sein.

Besonders bevorzugt ist das Bremssteuermodul ausgebildet zum Steuern eines Erstanhänger-Bremssystems des Erstanhängers, der an das Zugfahrzeug angekoppelt ist, mittels CAN-Datenbus und zum Versorgen des Erstanhänger-Bremssystems mit elektrischer Energie. In anderen Worten ist das Bremssteuermodul ausgebildet, um von dem Zugfahrzeug über die Zugfahrzeug-CAN-Schnittstelle Signale zu empfangen, die Steuerbefehle für das Bremssystem kodieren. Das Bremssteuermodul ist zudem ausgebildet, um Bremsen des Erstanhängers so anzusteuern, dass das kodierte Bremsmanöver durchgeführt wird. Bevorzugt ist das Bremssteuermodul zudem ausgebildet zum Steuern einer Warnlampe des Erstanhängers.

In einer bevorzugten Ausführungsform ist das Bremssteuermodul ausgebildet zum Abgeben von CAN-Daten an die Zweitanhänger-CAN-Schnittstelle, wobei die CAN-Daten diejenigen Befehle kodieren, die über die Zugfahrzeug-CAN-Schnittstelle empfangen werden. Das Bremssteuermodul dient damit einerseits zum Ansteuern des Bremssystems des Erstanhängers als auch als Relaisstation für den Zweitanhänger. Statt des CAN-Busses kann auch jeder andere Datenbus verwendet werden.

Ein besonders leicht zu bedienendes Bremssteuermodul wird erhalten, wenn die Zugfahrzeug-Schnittstelle über einen einzigen Zugfahrzeuganschlussstecker mit dem Zugfahrzeug verbindbar ist.

Besonders wartungsfrei ist das Bremssteuermodul, wenn der Zugfahrzeuganschlussstecker mittels eines einzigen Zugfahrzeuganschlusskabels angeschlossen ist. Neben dem mechanischen Verkoppeln von Erstanhänger und Zugfahrzeug bzw. Zweitanhänger und Erstanhänger muss damit lediglich eine Steckverbindung hergestellt werden zum Ansteuern des Bremssystems.

Als besonders geeignet hat sich herausgestellt, wenn die CAN-Schnittstelle eine 24 V-CAN-Schnittstelle ist. Alternativ oder additiv kann eine oder können zwei 5 V-CAN-Schnittstelle/n vorgesehen sein.

Um Platz zu sparen, ist bevorzugt vorgesehen, dass das Erstanhänger-Bremssystem und das Bremssteuermodul zu einem Gerät zusammengefasst sind.

Im Folgenden wird die Erfindung anhand der beigefügten Zeichnungen näher erläutert. Dabei zeigt

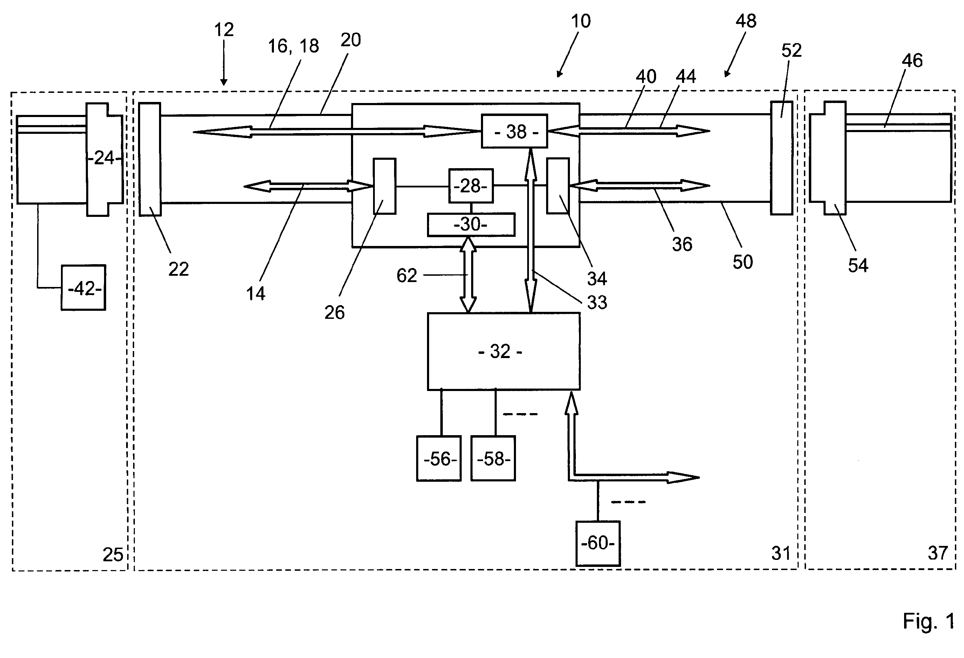

Figur 1 eine schematische Ansicht eines erfindungsgemäßen Bremsmoduls.

Figur 1 zeigt ein elektronisches Bremssteuermodul 10, das eine Zugfahrzeug-Schnittstelle 12 besitzt, die eine Zugfahrzeug-CAN-Schnittstelle 14 und eine kombinierte Schnittstelle umfasst, die ihrerseits eine Zugfahrzeug-Spannungsversorgungs-Schnittstelle 16 und eine Zugfahrzeug-Warnlampen-Schnittstelle 18 vereint. Die genannten Schnittstellen transportieren auf nicht eingezeichneten Einzel-Kabeln elektrische Spannung bzw. elektrische Signale und sind in einem Zugfahrzeuganschlusskabel 20 zusammengefasst, das in einem Zugfahrzeuganschlussstecker 22 endet. Der Zugfahrzeuganschlussstecker 22 ist ausgebildet zum Zusammenwirken mit einer Zugfahrzeuganschlussbuchse 24, die an einem schematisch eingezeichneten Zugfahrzeug 25 befestigt ist.

Über das Zugfahrzeuganschlusskabel 20 erhält das Bremssteuermodul 10 elektrische Energie, ein Steuersignal, das Befehle zum Ansteuern der Warnlampe kodiert und elektrische Signale auf einem CAN-Datenbus. Die Zugfahrzeug-CAN-Schnittstelle ist über eine Dekodiereinheit 26 mit einer elektrischen Steuerung 28 verbunden, die eingerichtet ist, um über einen Treiber 30 ein Erstanhänger-Bremssystem 32 eines schematisch eingezeichneten Erstanhängers 31 anzusteuern.

Gleichzeitig ist die elektrische Steuerung 28 eingerichtet, um über eine Kodiereinheit 34 diejenigen Befehle an eine Zweitanhänger-CAN-Schnittstelle 36 auszugeben, die über die Zugfahrzeug-CAN-Schnittstelle 14 empfangen worden sind. Es kann vorgesehen sein, dass die elektrische Steuerung 28 ausgebildet ist, um alle eingehenden Befehle auf dem CAN-Datenbus daraufhin zu überprüfen, ob sie für einen schematisch eingezeichneten Zweitanhänger 37 bestimmt sind, wobei nur diese Befehle auch an den Zweitanhänger 37 weitergesendet werden.

Die an der Zugfahrzeug-Spannungsversorgungs-Schnittstelle 16 anliegende Spannung wird von einer Verknüpfungseinheit 38 direkt auf eine Zweitanhänger-Spannungsversorgungs-Schnittstelle 40 weitergeleitet. Die über die Zweitanhänger-Warnlampen-Schnittstelle 44 empfangenen Signale werden mit den vom Bremssystem 32 über eine Bremssystem-Warnlampen-Schnittstelle 33 empfangenen Signalen verknüpft und über die Zugfahrzeug-Warnlampen-Schnittstelle 18 an das Zugfahrzeug, das schematisch das Bezugszeichen 25 trägt, zur Ansteuerung einer dort befindlichen Warnlampe 42 weitergeleitet.

Die durch die Zugfahrzeug-Warnlampen-Schnittstelle 18 eingehenden Warnlampen-Steuerbefehle, die denen für das Zugfahrzeug entsprechen, werden gegebenenfalls verstärkt und dann über eine Zweitanhänger-Warnlampen-Schnittstelle 44 an einen Zweitanhänger-Warnlampen-Anschluss 46 übermittelt. Die Zweitanhänger-Spannungsversorgungs-Schnittstelle 40, die Zweitanhänger-Warnlampen-Schnittstelle 44 und die Zweitanhänger-CAN-Schnittstelle 36 sind in einer Zweitanhänger-Schnittstelle 48 zusammengefasst. Sie wird über elektrische Kabel in einem Zweitanhängeranschlusskabel 50 zu einem Zweitanhänger-Anschlussstecker 52 geführt. Über eine Zweitanhänger-Anschlussbuchse 54 wird eine elektrische Verbindung zwischen dem Bremssteuermodul 10 und dem Zweitanhänger hergestellt, so dass die auf den Schnittstellen laufenden Daten bzw. die dort anliegenden Spannungen auf den Zweitanhänger übertragen werden können. Bei den CAN-Schnittstellen handelt es sich jeweils um 24 V-CAN-Schnittstellen.

Das Bremssystem 32 steht in elektrischem Kontakt mit einem Achslastsensor 56, einem Bremsbelagsverschleißsensor 58 und einem Reifendruckkontrollsystem 60. Von diesen Sensoren erfasste Daten werden über eine Datenleitung 62 und über den Treiber 30, der gleichzeitig als Dekodiereinheit für diese Daten fungiert, an die elektrische Steuerung 28 geliefert. Die elektrische Steuerung 28 ihrerseits sendet diese Daten über die Dekodiereinheit, die auch als Treiber 26 bezeichnet werden kann und gleichzeitig als Kodiereinheit fungiert, über die Zugfahrzeug-CAN-Schnittstelle an das Zugfahrzeug.

Der Zweitanhänger umfasst ein Bremssteuermodul, das mit dem in Figur 1 gezeigten Bremssteuermodul baugleich ist. Der Zweitanhänger umfasst zudem ebenfalls Achslastsenoren, Bremsbelagverschleißsensoren und ein Reifendruckkontrollsystem. Die von diesen Sensoren erfassten Daten werden über die der elektrischen Steuerung 28 entsprechende elektrische Steuerung des Bremssteuermoduls in dem Zweitanhänger über die die Zweitanhänger-CAN-Schnittstelle 36, die elektrische Steuerung 28 und die Zugfahrzeug-CAN-Schnittstelle 14 an das Zugfahrzeug weitergeleitet. Auf diese Weise liegen im Zugfahrzeug stets Sensordaten von allen Anhängern vor.

## Patentansprüche

1. Bremssteuermodul für einen Erstanhänger eines Lastkraftwagen, mit
(a) einer Zugfahrzeug-Schnittstelle (12), die
(i) eine Zugfahrzeug-CAN-Schnittstelle (14) zum Verbinden mit einem Zugfahrzeug-CAN-Anschluss eines Zugfahrzeugs,
(ii) eine Zugfahrzeug-Spannungsversorgungs-Schnittstelle (16) zum Verbinden mit einem Zugfahrzeug-Spannungsversorgungs-Anschluss des Zugfahrzeugs und
(iii) eine Zugfahrzeug-Warnlampen-Schnittstelle (18) zum Verbinden mit einem Zugfahrzeug-Warnlampen-Anschluss des Zugfahrzeugs
umfasst, und
(b) einer Zweitanhänger-Schnittstelle (48) zum Anschließen eines Zweitanhängers, der an dem Erstanhänger angekoppelt ist, die
(i) eine Zweitanhänger-CAN-Schnittstelle (36) zum Verbinden mit einem Zweitanhänger-CAN-Anschluss des Zweitanhängers,
(ii) eine Zweitanhänger-Spannungsversorgungs-Schnittstelle (40) zum Verbinden mit einem Spannungs-Anschluss des Zweitanhängers und
(iii) eine Zweitanhänger-Warnlampen-Schnittstelle (44) zum Verbinden mit einem Zweitanhänger-Warnlampen-Anschluss (46) des Zweitanhängers
umfasst,
**dadurch gekennzeichnet, dass**
die Zugfahrzeug-Schnittstelle (12) über einen einzig Zugfahrzeuganschlussstecker (22) mit dem Zugfahrzeug verbindbar ist und dass der Zugfahrzeuganschlussstecker (22) mittels eines einzigen Zugfahrzeuganschlusskabels (20) angeschlossen ist und die Zweitanhänger-Schnittstelle über einen einzigen Zweitanhängeranschlussstecker (52) mit dem Zweitanhänger verbindbar ist und dass der Zweitanhängeranschlussstecker (52) mittels eines einzigen Zweitanhängeranschlusskabels (50) angeschlossen ist.

2. Bremssteuermodul nach Anspruch 1, **dadurch gekennzeichnet, dass** es ausgebildet ist zum Steuern des Erstanhänger-Bremssystems eines Erstanhängers, der an das Zugfahrzeug angekoppelt ist, mittels CAN-Datenbus und zum Versorgen des Erstanhänger-Bremssystems mit elektrischer Energie.

3. Bremssteuermodul nach einem der vorstehenden Ansprüche, **dadurch gekennzeichnet, dass** es ausgebildet ist zum Abgeben von CAN-Daten an die Zweitanhänger-CAN-Schnittstelle, wobei die CAN-Daten diejenigen Befehle kodieren, die über die Zugfahrzeug-CAN-Schnittstelle empfangen werden.

4. Bremssteuermodul nach einem der vorstehenden Ansprüche, **dadurch gekennzeichnet, dass** die CAN-Schnittstellen 24V-CAN-Schnittstellen sind.

5. Bremssteuermodul nach einem der vorstehenden Ansprüche, **dadurch gekennzeichnet, dass** die Spannungsversorgung zum Zweitanhänger und zum Erstanhänger-Bremssystem (32) gegen elektrische Überlastung abgesichert ist.

6. Bremssteuermodul nach einem der vorstehenden Ansprüche, **dadurch gekennzeichnet, dass** das Erstanhänger-Bremssystem in das Bremssteuermodul integriert ist.

7. Anhänger für einen Lastkraftwagen, **gekennzeichnet durch** ein Bremsmodul (10) nach einem der vorstehenden Ansprüche.

8. Lastkraftwagen, der
- ein Zugfahrzeug,
- einen Erstanhänger, der an dem Zugfahrzeug angekoppelt ist, und
- einen Zweitanhänger, der an dem Erstanhänger angekoppelt ist,
umfasst, **dadurch gekennzeichnet, dass** der Erstanhänger und/oder der Zweitanhänger dem Anhänger gemäß Anspruch 7 entsprechen.

## Claims

1. Brake control module for a first trailer of a heavy goods vehicle, having
(a) a towing vehicle interface (12) which comprises
(i) a towing vehicle CAN interface (14) for connection to a towing vehicle CAN connection of a towing vehicle,
(ii) a towing vehicle voltage supply interface (16) for connection to a towing vehicle voltage supply connection of the towing vehicle, and
(iii) a towing vehicle warning lamp interface (18) for connection to a towing vehicle warning lamp connection of the towing vehicle, and
(b) a second trailer interface (48) for connecting a second trailer which is coupled to the first trailer, which second trailer interface comprises
(i) a second trailer CAN interface (36) for connection to a second trailer CAN connection of the second trailer,
(ii) a second trailer voltage supply interface (40) for connection to a voltage connection of the second trailer, and
(iii) a second trailer warning lamp interface (44) for connection to a second trailer warning lamp connection (46) of the second trailer,
**characterized in that**
the towing vehicle interface (12) can be connected to the towing vehicle via a single towing vehicle connection plug (22), and **in that** the towing vehicle connection plug (22) is connected by means of a single towing vehicle connection cable (20), and the second trailer interface can be connected to the second trailer via a single second trailer connection plug (52), and **in that** the second trailer connection plug (52) is connected by means of a single second trailer connection cable (50).

2. Brake control module according to Claim 1, **characterized in that** it is designed to control the first trailer brake system of a first trailer, which is coupled to the towing vehicle, by means of a CAN data bus and to supply the first trailer brake system with electrical energy.

3. Brake control module according to one of the preceding claims, **characterized in that** it is designed to output CAN data to the second trailer CAN interface, the CAN data coding those commands which are received via the towing vehicle CAN interface.

4. Brake control module according to one of the preceding claims, **characterized in that** the CAN interfaces are 24 V CAN interfaces.

5. Brake control module according to one of the preceding claims, **characterized in that** the voltage supply to the second trailer and to the first trailer brake system (32) is protected against electrical overloading.

6. Brake control module according to one of the preceding claims, **characterized in that** the first trailer brake system is integrated in the brake control module.

7. Trailer for a heavy goods vehicle, **characterized by** a brake module (10) according to one of the preceding claims.

8. Heavy goods vehicle which comprises
- a towing vehicle,
- a first trailer which is coupled to the towing vehicle, and
- a second trailer which is coupled to the first trailer,
**characterized in that** the first trailer and/or the second trailer correspond(s) to the trailer according to Claim 7.

## Revendications

1. Module de commande de frein pour la première remorque d'un camion, présentant :
(a) une interface (12) de véhicule tracteur, qui comporte
(i) une interface CAN (14) de véhicule tracteur à relier à une borne de raccordement CAN du véhicule tracteur,
(ii) une interface (16) de tension d'alimentation du véhicule tracteur à relier à une borne de raccordement de tension d'alimentation du véhicule tracteur et
(iii) une interface (18) de témoins d'avertissement du véhicule tracteur à relier à une borne de raccordement de témoins d'avertissement du véhicule tracteur,
(b) une interface (48) de deuxième remorque à raccorder à une deuxième remorque accouplée à la première remorque, qui comporte
(i) une interface CAN (36) de deuxième remorque à relier à une borne de raccordement CAN de la deuxième remorque,
(ii) une interface (40) de tension d'alimentation de la deuxième remorque à relier à une borne de raccordement de tension d'alimentation de la deuxième remorque et
(iii) une interface (44) de témoins d'avertissement de la deuxième remorque à relier à une borne de raccordement (46) de témoins d'avertissement de la deuxième remorque,
**caractérisé en ce que**
l'interface (12) de véhicule tracteur peut être reliée au véhicule tracteur par l'intermédiaire d'une fiche de raccordement (22) de véhicule tracteur,
**en ce que** la fiche de raccordement (22) de véhicule tracteur est raccordée au moyen d'un seul câble de raccordement de véhicule tracteur (20),
**en ce que** l'interface de seconde remorque peut être reliée à la deuxième remorque par l'intermédiaire d'une seule fiche de raccordement (52) de deuxième remorque et
**en ce que** la fiche de raccordement (52) de deuxième remorque est raccordée au moyen d'un seul câble de raccordement de deuxième remorque (50).

2. Module de commande de frein selon la revendication 1, **caractérisé en ce qu'**il est configuré pour commander le système de freinage d'une première remorque accouplée au véhicule tracteur au moyen d'un bus de données CAN et pour alimenter en énergie le système de freinage de la première remorque.

3. Module de commande de frein selon l'une des revendications précédentes, **caractérisé en ce qu'**il est configuré pour délivrer des données CAN à l'interface CAN de la deuxième remorque, les données CAN codant les ordres reçus par l'intermédiaire de l'interface CAN du véhicule tracteur.

4. Module de commande de frein selon l'une des revendications précédentes, **caractérisé en ce que** les interfaces CAN sont des interfaces CAN à 24 V.

5. Module de commande de frein selon l'une des revendications précédentes, **caractérisé en ce que** l'alimentation en tension de la deuxième remorque et du système de freinage (32) de la première remorque est protégée contre les surcharges.

6. Module de commande de frein selon l'une des revendications précédentes, **caractérisé en ce que** le système de freinage de la première remorque est intégré dans le module de commande de frein.

7. Remorque pour camion, **caractérisée par** un module (10) selon l'une des revendications précédentes.

8. Camion comportant
- un véhicule tracteur,
- une première remorque accouplée au véhicule tracteur et
- une deuxième remorque accouplée à la première remorque,
**caractérisé en ce que**
la première remorque et/ou la deuxième remorque sont selon la revendication 7.
